# EUROPEAN PATENT SPECIFICATION

(11) **EP 2 862 479 B1**
(45) Date of publication and mention of the grant of the patent: **24.04.2019**
(21) Application number: 13812816.0
(22) Date of filing: 01.07.2013
(51) Int. Cl.: B60N 2/90, B60N 2/809, B60N 2/838, B60N 2/80

(54) **HEADREST SUPPORT STRUCTURE**
STÜTZSTRUKTUR FÜR KOPFSTÜTZE
STRUCTURE DE SUPPORT D'APPUIE-TÊTE

(30) Priority: 02.07.2012 JP 2012148721; 04.09.2012 JP 2012194313
(43) Date of publication of application: 22.04.2015
(73) Proprietor: Toyota Jidosha Kabushiki Kaisha, Toyota-shi, Aichi 471-8571 (JP)
(72) Inventor: TAKAHASHI, Gen, Toyota-shi, Aichi 471-8571 (JP); KATO, Hideyuki, Toyota-shi, Aichi 471-8571 (JP); KOBAYASHI, Hideki, Toyota-shi, Aichi 471-8571 (JP)
(74) Representative: TBK
(86) International application number: PCT/JP2013/068020
(87) International publication number: WO 2014/007202

(56) References cited:
- EP-A1- 2 119 603
- DE-A1- 10 151 360
- JP-A- 2000 102 444
- JP-A- 2009 183 695
- JP-A- 2011 201 526
- US-A- 4 854 642

## Description

### TECHNICAL FIELD

The present invention relates to a headrest support structure for elastically supporting a headrest so as to make the headrest function as a dynamic damper.

### BACKGROUND ART

As the headrest support structure as described above, there has been conventionally known a structure as described in Patent Document 1. The headrest support structure described therein is configured as follows. Note that, in the following description, that side of the headrest on which a head of a person sitting on a seat is placed is assumed a front side of the headrest support structure, and its reverse direction is assumed a rear side of the headrest support structure.

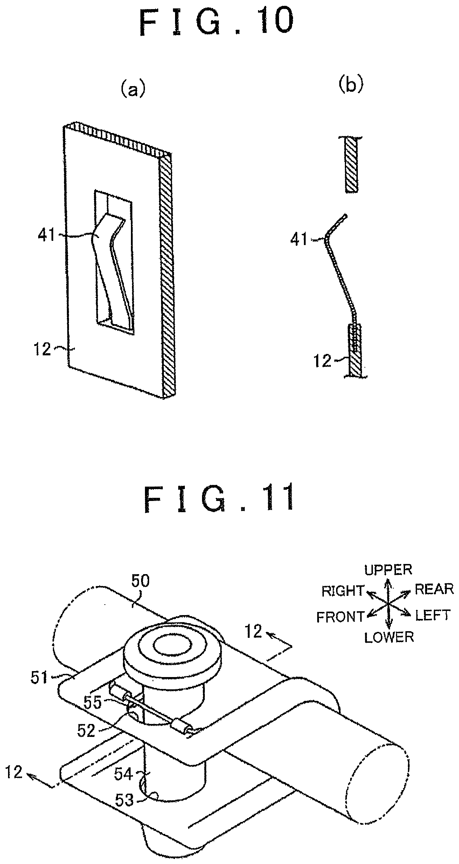

As illustrated in FIG 11, a support bracket 51 is fixed to a seatback frame 50 forming a frame structure of a seatback. The support bracket 51 is made of a metal plate bent generally in a U-shape. Through holes 52, 53 are formed in an upper part and a lower part of the support bracket 51, respectively. Note that the through hole 52 formed in the upper part of the support bracket 51 is an elongated hole extending in a seat longitudinal direction. A resin headrest support 54 for supporting a headrest stay 56 (see FIG. 11) is inserted into the through holes 52, 53. Note that a wire-shaped spring 55 made of metal is provided over a front part of the through hole 52 of the support bracket 51. The headrest support 54 is attached to the support bracket 51 in a state where the headrest support 54 receives a biasing force of the spring 55 toward the rear side.

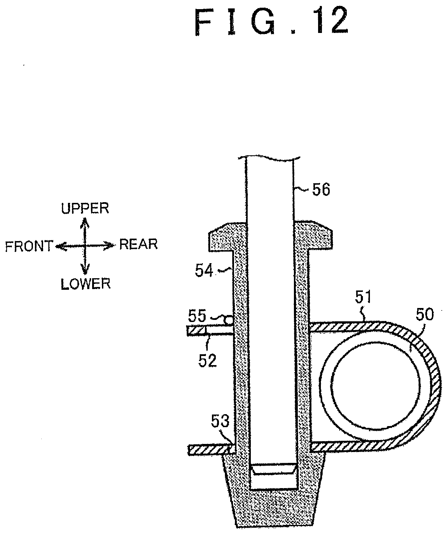

As illustrated in FIG. 12, in the headrest support structure, the headrest support 54 attached to the headrest stay 56 is disposed swingably relative to the support bracket 51 in a longitudinal direction with the through hole 53 as a fulcrum, along with flexion of the spring 55. On that account, in the support structure, the headrest is elastically supported so as to be displaceable in the longitudinal direction, so that the headrest functions as a dynamic damper for reducing vibration of the seat in the longitudinal direction.

Patent Document 2 discloses a device which consists of a guide sleeve, fitted into a holder tube in the seat. The guide sleeve has a main body of plastic, with a first spring section projecting inwards relative to the inner sleeve surface, and a second hook-shaped spring section, projecting outward relative to the outer surface of the sleeve. Both spring sections are of a plastic material, which has different e.g. higher elasticity from the main sleeve body material.

### Citation List

### Patent Documents

Patent Document 1: Japanese Examined Utility Model Application Publication No. 61-149552
Patent Document 2: DE 101 51 360 A

### SUMMARY OF THE INVENTION

### Problem to be Solved by the Invention

However, in such a conventional support structure as disclosed in Patent Document 1, on the occasion of inserting the headrest support 54 into the through holes 52, 53 of the support bracket 51, when a position or an orientation of a central axis thereof is misaligned, the headrest support 54 may be caught on the spring 55. Further, during the insertion, the metal spring 55 digs into a surface of the headrest support 54 or scrapes off the surface, so that friction between the spring 55 and the headrest support 54 may become large. This may result in that, on the occasion of assembling of the headrest support 54, the headrest support 54 cannot be inserted into the support bracket 51 smoothly.

An object of the present invention is to enable a headrest support to be smoothly inserted into a support bracket in a headrest support structure for making a headrest function as a dynamic damper by elastically supporting, by a spring, the support bracket to be inserted into the support bracket.

### Means for Solving the Problem

In order to achieve the above object, the invention provides a headrest support structure according to claim 1 including: a metal tubular support bracket configured to be provided in a seatback frame; a resin headrest support configured to support a headrest stay and inserted into the support bracket; and a spring disposed between the support bracket and the headrest support. The headrest support is elastically supported in a swingable manner relative to the support bracket so as to make a headrest function as a dynamic damper. The spring is a metal leaf spring provided integrally with the headrest support.

In the above configuration, since the metal leaf spring is provided integrally with the headrest support, the headrest support is never caught on the spring during the insertion. Further, the spring is made of metal and a member making contact with the spring in a sliding manner during the insertion of the headrest support is the metal support bracket, so that an increase of friction due to bite or the like is suppressed. Accordingly, it is possible to smoothly insert the headrest support into the support bracket in the headrest support structure for making the headrest function as a dynamic damper.

It is preferable that the headrest support structure further include a metal stopper provided in the headrest support and formed integrally with the leaf spring, and the stopper regulate swing of the headrest support relative to the support bracket by abutting with an inner peripheral surface of the support bracket. In this case, since a part made of resin having a thermal expansion coefficient larger than that of metal is not provided between the stopper and the leaf spring, it is possible to restrain the influence of a temperature change with respect to a damper characteristic and a support characteristic of the headrest, appropriately.

It is in accordance with the invention that the leaf spring of the headrest support structure be a cantilever spring having a fixed end in an end thereof in an insertion direction of the headrest support with respect to the support bracket, and having a free end in its reverse end. In such a configuration, such improper assembly is hardly caused that the leaf spring is placed outside the support bracket at the time of insertion of the headrest support.

It is in accordance with the invention that the headrest support of the headrest support structure have a stay hole configured such that the headrest stay is inserted therein, and have a tubular shape of which an end in an insertion direction of the headrest stay is closed; and that the fixed end of the leaf spring be embedded in the end thus closed. With such a configuration, rigidity of the headrest support is increased.

### BRIEF DESCRIPTION OF THE DRAWINGS

[FIG. 1] FIG. 1 is an exploded perspective view of a headrest support structure according to a first embodiment.
[FIG. 2] FIG. 2(a) is a perspective view of a headrest support provided in the headrest support structure when viewed from a left front side; and FIG. 2(b) is a perspective view thereof when viewed from a right rear side.
[FIG. 3] FIG. 3 is a sectional side view of the headrest support and a support bracket.
[FIG. 4] FIG. 4 is a sectional side view of the headrest support and its peripheral area when a headrest is displaced forward.
[FIG. 5] FIG. 5 is a graph showing a relationship between displacement of the headrest and a load required for the displacement of the headrest.
[FIG. 6] FIG. 6 is a sectional side view of a tip end of the headrest support and its peripheral area when improper assembly occurs.
[FIG. 7] FIGS. 7(a) to 7(c) are sectional views each illustrating an insertion form of a leaf spring with respect to the headrest support.
[FIG. 8] FIG. 8(a) is a perspective view of a headrest support provided in a headrest support structure according to a second embodiment, which does not form part of the invention, when viewed from a left front side; and FIG 8(b) is a perspective view thereof when viewed from a right rear side.
[FIG. 9] FIG. 9(a) is a sectional side view of a tip portion of the headrest support and its peripheral area when no external force is applied to a headrest; and FIG. 9(b) is a sectional side view of the tip portion of the headrest support and its peripheral area when the headrest is displaced forward.
[FIG. 10] FIG. 10(a) is a perspective view illustrating another example of a spring that can be employed in the above embodiments; and FIG. 10(b) is a sectional side view of the another example.
[FIG. 11] FIG. 11 is a view illustrating a perspective structure of a headrest support and its peripheral area of a conventional headrest support structure.
[FIG. 12] FIG. 12 is a view illustrating a sectional structure of the headrest support and its peripheral area of the conventional headrest support structure, taken along a line 12-12 in FIG. 11.

### MODES FOR CARRYING OUT THE INVENTION

### (First Embodiment)

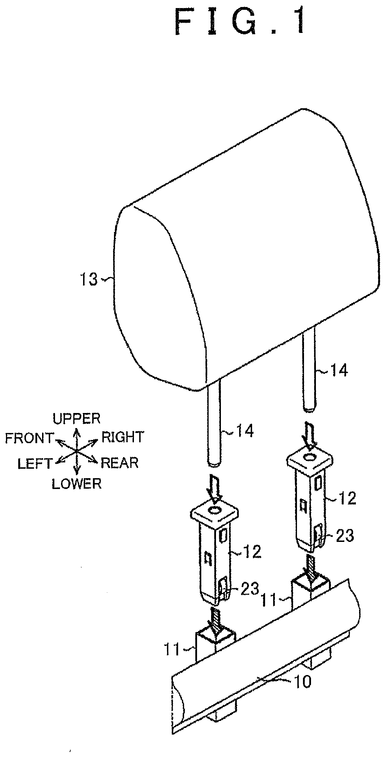

The following describes a first embodiment of a headrest support structure in detail with reference to FIGS. 1 to 7.

As illustrated in FIG 1, two support brackets 11 are provided at an interval in an upper part of a seatback frame 10 forming a framework of a seatback. Each of the support brackets 11 is made of metal so as to have a squarely cylindrical section, and is fixed to the support bracket 11 by welding or brazing. A resin headrest support 12 is inserted into each of the support brackets 11. Then, two headrest stays 14 extending downward from a headrest 13 are inserted into the headrest supports 12, respectively, and thus, the headrest 13 is supported by the seatback frame 10.

Note that, in the following description, that side of the headrest 13 on which a head of a person sitting on a seat is placed is assumed a front side of a headrest support structure, and its reverse direction is assumed a rear side of the headrest support structure. Further, an insertion direction of the headrest support 12 with respect to the support bracket 11 is assumed a lower side of the headrest support structure, and its reverse direction is assumed an upper side of the headrest support structure.

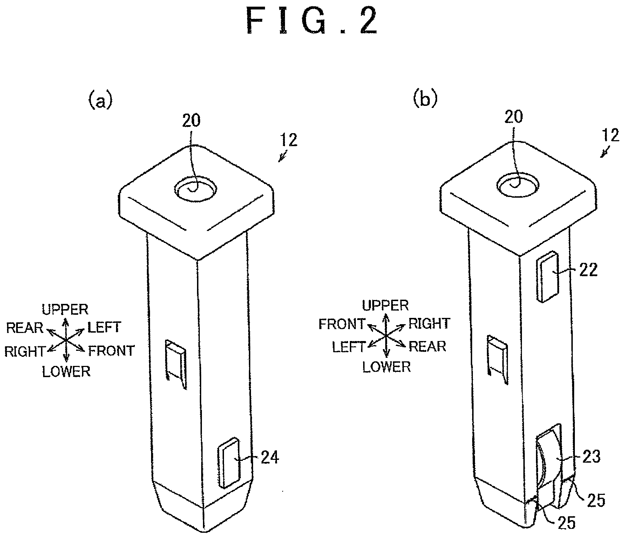

As illustrated in FIG. 2(a), a lower end part of the headrest support 12 is formed to be tapered. Further, a stay hole 20 into which the headrest stay 14 is inserted is formed in an upper end of the headrest support 12 along its central axis.

A bead 24 is provided on a front side of a lower part of the headrest support 12. The bead 24 is made of the same resin as the headrest support 12. Note that the bead 24 may be formed integrally with the headrest support 12, or the bead 24 may be formed separately and fixed to the headrest support 12 later by adhesion.

Further, as illustrated in FIG. 2(b), a bead 22 is provided on a rear side of an upper part of the headrest stay 14. The bead 22 is also made of the same resin as the headrest support 12. Further, a metal leaf spring 23 is provided on a rear side of the lower part of the headrest stay 14. The leaf spring 23 is a cantilever spring having a fixed end in an upper end thereof, that is, an end thereof in the insertion direction of the headrest support 12 with respect to the support bracket 11, and having a free end in its reverse end.

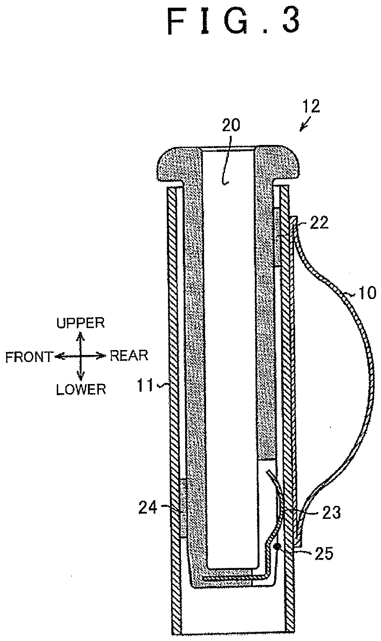

As illustrated in FIG. 3, the headrest support 12 is formed in a tubular shape having a closed lower end. That is, an end thereof in the insertion direction with respect to the support bracket 11 is closed. A base portion of the leaf spring 23, namely, the fixed end thereof is embedded in the closed end.

Note that, as illustrated in FIG. 3, a gap between an outer peripheral surface of the headrest support 12 and an inner peripheral surface of the support bracket 11 in the upper part of the headrest support 12 is reduced by the bead 22. Further, a gap between the outer peripheral surface of the headrest support 12 and the inner peripheral surface of the support bracket 11 in the lower part of the headrest support 12 is shortened by the bead 24, so that the leaf spring 23 abuts with a rearward inner wall of the support bracket 11 in a state where the leaf spring 23 is bent by a given amount. Cylindrical pins (not shown) project on bilateral side surfaces of the upper part of the headrest support 12, namely, surfaces parallel to a plane of paper of FIG. 3. The pins are supported pivotably by an inner wall of the support bracket 11. It is preferable for the pins to be placed at about the same height as the bead 22.

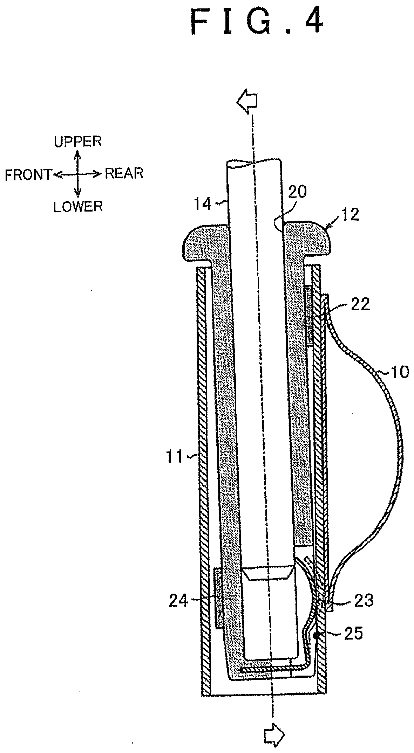

Such a headrest support 12 is supported swingably around the pins relative to the support bracket 11. On the occasion of swing of the headrest support 12 in a counterclockwise direction in FIG. 4, a reaction force is generated due to flexion of the leaf spring 23. A range of such swing of the headrest support 12 is from a position where the bead 24 provided on its front lower part abuts with a forward inner wall of the support bracket 11 to a position where a lower part (a stopper 25) of the leaf spring 23 on a rearward side surface of the headrest support 12 abuts with the rearward inner wall of the support bracket 11.

Next will be described an operation of such a headrest support structure.

When the headrest 13 is displaced forward, the headrest support 12 into which the headrest stay 14 is inserted swings around the pins relative to the support bracket 11 in the counterclockwise direction in FIG 4. On the occasion of the swing, the leaf spring 23 is pressed against the rearward inner wall of the support bracket 11 so as to be bent, so that a resistance to the displacement of the headrest 13 is generated.

When a displacement of the headrest 13 toward the front side reaches a given amount, the stopper 25 abuts with the rearward inner wall of the support bracket 11, so that further swing of the headrest support 12 is regulated. Accordingly, further forward displacement of the headrest 13 is performed by elastic deformation of the headrest stay 14.

In the meantime, on the occasion of rearward displacement of the headrest 13, since the bead 24 abuts with the forward inner wall of the support bracket 11, swing of the headrest support 12 relative to the support bracket 11 is regulated from the first. Accordingly, the rearward displacement of the headrest 13 is performed by elastic deformation of the headrest stay 14 from the beginning.

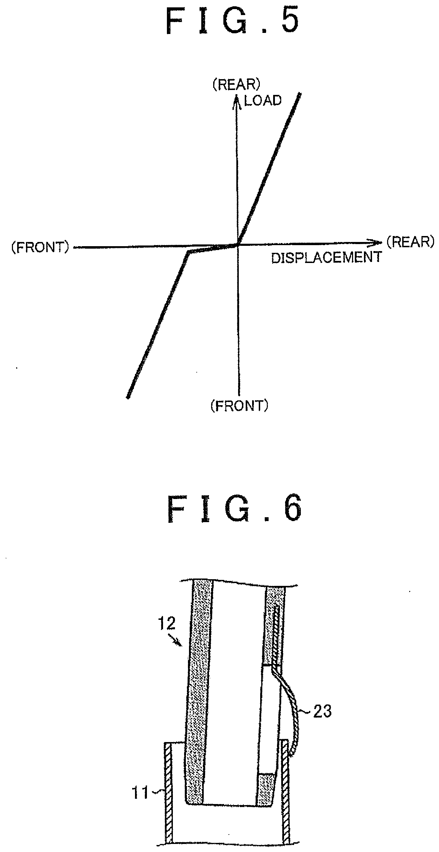

Accordingly, a relationship between a displacement of the headrest 13 in the longitudinal direction and a load necessary for the displacement is shown in FIG 5. That is, a region where support rigidity of the headrest 13 is small is set from an initial position with a displacement of 0, that is, from a position of the headrest 13 under no external force toward the front side. Note that, with respect to forward displacement of more than a given amount and rearward displacement from the initial position, the support rigidity of the headrest 13 becomes large. In view of this, in a seat employing the headrest support structure, small vibration of the headrest 13 relative to the seatback frame 10 is allowed, and the headrest 13 functions as a dynamic damper for reducing vibration of the seat. Note that high support rigidity is exhibited with respect to the rearward displacement of the headrest 13, and therefore, when a vehicle has a rear-end collision, for example, a head of an occupant can be surely received by the headrest 13.

Note that, on the occasion of inserting the headrest support 12 into the support bracket 11 at the time of assembly of the headrest support structure, the headrest support 12 is never caught on the leaf spring 23 during the insertion, because the metal leaf spring 23 is provided integrally with the headrest support 12. Further, the leaf spring 23 is made of metal. Since a member making contact with the leaf spring 23 in a sliding manner during the insertion of the headrest support 12 is the metal support bracket 11, an increase of friction due to bite is suppressed. On that account, in such a headrest support structure, the insertion of the headrest support 12 can be performed smoothly.

Note that, in a case where that end of the leaf spring 23 in the insertion direction of the headrest support 12 is a free end, when the central axis of the headrest support 12 deviates or inclines from the central axis of the support bracket 11 at the time of the insertion, such improper assembly may be caused that the leaf spring 23 is placed outside the support bracket 11 as illustrated in FIG. 6. In that respect, in the headrest support structure of the present embodiment, since that end of the leaf spring 23 which is reverse to the insertion direction of the headrest support 12 is a free end, such improper assembly does not occur.

Incidentally, even if a position of the leaf spring 23 is replaced with a position of the pins, it is also possible to obtain a support characteristic of the headrest 13 as illustrated in FIG. 5.

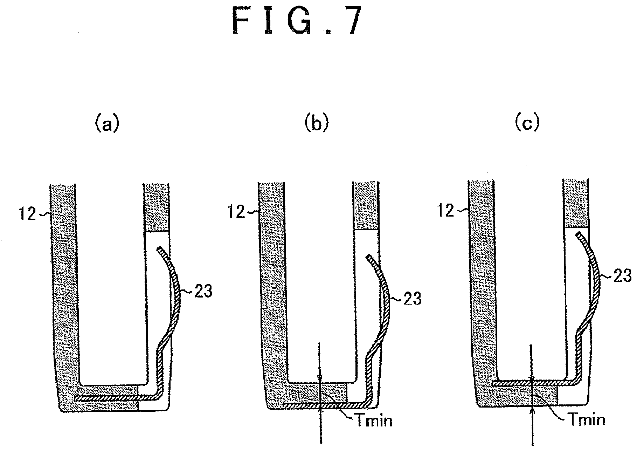

Note that the following forms can be used as an insertion method of the leaf spring 23 to the headrest support 12. In an example of FIG. 7(a), a base end portion of the leaf spring 23 is embedded in the middle of the lower end of the headrest support 12 in its thickness direction. In this case, it is possible to increase holding power of the leaf spring 23 to the headrest support 12. In an example of FIG. 7(b), the base end portion of the leaf spring 23 is embedded in an outer surface, that is, a lower surface of the lower end of the headrest support 12. Further, in an example of FIG. 7(c), the base end portion of the leaf spring 23 is disposed on an inner surface, that is, a top surface of the lower end of the headrest support 12. In the case of the examples of FIG. 7(b) and FIG. 7(c), a resin portion of the headrest support 12 is not divided into two by the leaf spring 23 in the thickness direction in an area where the base end portion of the leaf spring 23 is inserted. Accordingly, a minimum thickness Tmin (a minimum value of the thickness) of the resin material of the headrest support 12 can be made larger.

According to the headrest support structure of the present embodiment described above, it is possible to yield the following effects.
(1) In the present embodiment, the metal leaf spring 23 provided integrally with the headrest support 12 is used as a spring for elastically supporting the headrest support 12 in a swingable manner relative to the support bracket 11 so as to make the headrest 13 function as a dynamic damper. On that account, an increase of friction due to catching of the spring to the headrest support 12 or bite of the spring is restrained, thereby allowing the support bracket 11 to be smoothly inserted into the headrest support 12.
(2) Since the leaf spring 23 is made of metal having a thermal expansion coefficient largely smaller than that of resin, it is possible to restrain a change of a support characteristic and a damper characteristic of the headrest 13 due to thermal expansion of the leaf spring 23..
(3) The pins serving as a center of the swing of the headrest support 12 relative to the support bracket 11 are provided in the upper part of the headrest support 12, and the leaf spring 23 is provided on the rear side of the lower part of the headrest support 12. Such a configuration makes it hard for the center of the swing of the headrest support 12 relative to the support bracket 11 to vibrate, so that vibration of the headrest 13 is easily controlled. Accordingly, it is possible to more precisely set a damper characteristic of the headrest 13.
(4) Since the pins and the leaf spring 23 are placed as described above, it is possible to increase an allowable displacement of the headrest support 12 in an area where the stopper 25 is provided, thereby making it possible to further decrease the influence of machining error, improper assembly, and thermal expansion of each member with respect to a damper characteristic and a support characteristic of the headrest 13.
(5) The leaf spring 23 is a cantilever spring having a fixed end in the end thereof in the insertion direction of the headrest support 12 with respect to the support bracket 11, and having a free end in its reverse end. In view of this, such improper assembly is hardly caused that the leaf spring 23 is placed outside the support bracket 11 at the time of insertion of the headrest support 12.
(6) The headrest support 12 includes a stay hole 20 into which the headrest stay 14 is inserted, and is formed in a tubular shape in which the end thereof in the insertion direction of the headrest stay 14 is closed. Since the base portion of the leaf spring 23 is embedded in the closed end, the rigidity of the headrest support 12 is increased.

### (Second Embodiment)

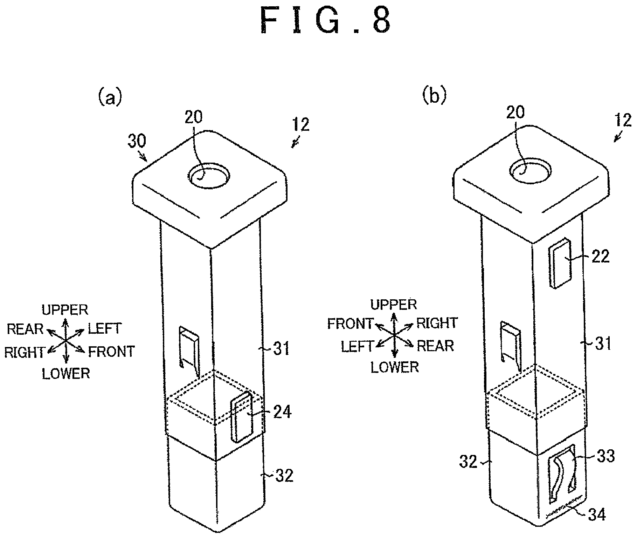

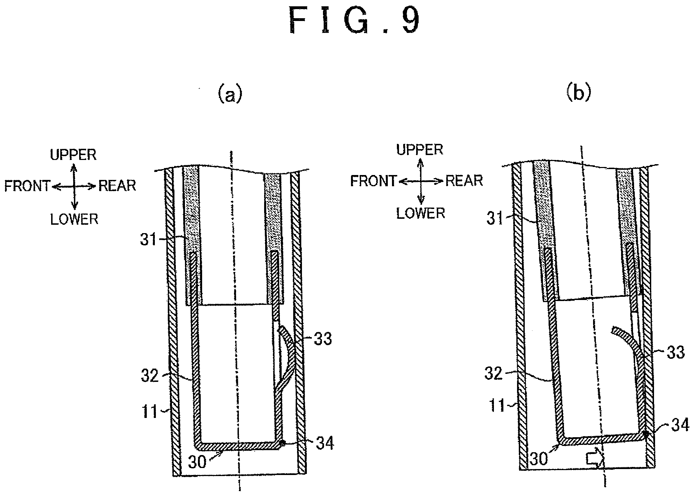

Next will be described a second embodiment of the headrest support structure in detail with reference to FIGS. 8 and 9. The second embodiment does not form part of the invention. Note that the headrest support structure of the present embodiment is the same as the first embodiment except for a configuration of a headrest support. In the present embodiment, a constituent common in the first embodiment has the same reference sign as in the first embodiment, and a detailed description thereof is omitted.

As illustrated in FIG. 8(a) and FIG. 8(b), a headrest support 30 employed in the headrest support structure of the present embodiment includes a metal portion 32 constituting its lower end part, and a resin portion 31 constituting the other part. The metal portion 32 made of metal is integrated with the resin portion 31 made of resin by insert molding. Pins (not shown) serving as a center of swing of a headrest support 12 relative to a support bracket 11 are provided on bilateral side surfaces of an upper part of the resin portion 31. Further, beads 22, 24 are provided on a rearward upper part and a forward lower part of the resin portion 31, respectively.

The metal portion 32 is formed in a tubular shape having a closed bottom portion. A leaf spring 33 is formed integrally with a rearward side surface of the metal portion 32. The leaf spring 33 is a cantilever spring having a fixed end in its lower end and a free end in its upper end.

As illustrated in FIG. 9(a), such a headrest support 30 is disposed swingably relative to the support bracket 11 in a state where the headrest support 30 is elastically supported by the leaf spring 33. Swing of the headrest support 30 in a direction where a headrest 13 is displaced forward is allowed to a position where a rear side of a lower end of the metal portion 32 abuts with a rearward inner wall of the support bracket 11, as illustrated in FIG. 9(b). That is, in the headrest support 30, the rear side of the lower end of the metal portion 32 serves as a stopper 34.

According to the headrest support structure of the present embodiment described above, it is possible to yield the same effects as the first embodiment. Moreover, according to the headrest support structure of the present embodiment, it is possible to further yield the following effect.

(7) In the present embodiment, the stopper 34 for regulating the swing of the headrest support 12 relative to the support bracket 11 by abutting with an inner peripheral surface of the support bracket 11 is provided in the headrest support 12, and the stopper 34 is formed integrally with the leaf spring 33. In such a configuration, since a part made of resin having a thermal expansion coefficient larger than metal is not provided between the stopper 34 and the leaf spring 33, it is possible to restrain the influence of a temperature change with respect to a damper characteristic and a support characteristic of the headrest 13, appropriately.

Note that the above embodiments can be modified as follows.
- In the first embodiment, the leaf spring 23 is integrally fixed to the headrest support 12 such that the base portion of the leaf spring 23 is embedded in the lower end part of the headrest support 12.
- In the above embodiment, the leaf spring 23, 33, 41 configured as a cantilever spring has a fixed end in the end thereof in the insertion direction of the headrest support 12 with respect to the support bracket 11, and has a free end in its reverse end.
- In the above embodiment, the bead 22, 24 is provided on the outer peripheral surface of the headrest support 12, 30, but the bead 22, 24 may be provided on the inner peripheral surface of the support bracket 11.
- In the above embodiment, the bead 22, 24 is made of resin, but the bead 22, 24 may be made of any material provided that the material has rigidity sufficiently higher than the leaf spring 23, 33, 41.
- If it is possible to keep reduction in vibration of the center of the swing of the support bracket 11 and abutment of the leaf spring 23, 33, 41 with the inner peripheral surface of the support bracket 11 without providing the bead 22, 24, the bead 22, 24 may be omitted.
- In the above embodiment, the pins are provided in the upper part of the headrest support 12, 30, and the leaf spring 23, 33, 41 is provided on the rear side of the lower part of the headrest support 12, 30. However, the positions of the pins and the leaf spring 23, 33, 41 may be replaced. That is, the pins may be provided in the lower part of the headrest support 12, 30, and the leaf spring 23, 33, 41 may be provided on the front side of the upper part thereof. Even in such a case, if the allowable displacement of the headrest support 12 in the area where the stopper 25, 34 is provided can be made sufficiently large, it is possible to sufficiently decrease the influence of machining error, improper assembly, and thermal expansion of each member with respect to a damper characteristic or a support characteristic of the headrest 13.
- In the above embodiment, the pins serving as the center of the swing of the headrest support 12, 30 are formed on the bilateral side surfaces of the headrest support 12. The pins may be formed on the inner peripheral surface of the support bracket 11.
- A plurality of leaf springs 23, 33, 41 may be provided in the headrest support 12, 30. For example, the leaf spring 23, 33, 41 may be provided on each of the front side and the rear side of the headrest support 12, 30. In this case, a support characteristic of the headrest 13 becomes different from that illustrated in FIG. 5. However, the fact remains that small vibration of the headrest 13 relative to the seatback frame 10 is allowed, so that it is possible to make the headrest 13 function as a dynamic damper.
- In the above embodiment, the headrest support structure is applied to both of two right and left headrest stays 14, but the headrest support structure may be applied to only either one of them. That is, either one of the headrest stays 14 may be supported by a headrest support structure configured so that the headrest support 12 is rigidly supported by the support bracket 11 without any spring. Even in this case, in one of them which is supported by the headrest support structure of the above embodiment, the headrest stay 14 is supported elastically, so that it is possible to make the headrest 13 function as a dynamic damper.

## Claims

1. A headrest support structure, comprising:
a metal tubular support bracket (11) configured to be provided in a seatback frame (10);
a resin headrest support (12) configured to support a headrest stay (14) and inserted into the support bracket; and
a spring (23) disposed between the support bracket (11) and the headrest support (12), wherein:
the headrest support (12) is elastically supported in a swingable manner relative to the support bracket (11) so as to make a headrest function as a dynamic damper;
the spring (23) is a metal leaf spring (23) provided integrally with the headrest support (12); and
the leaf spring (23) includes a cantilever spring having a fixed end in an end thereof in an insertion direction of the headrest support with respect to the support bracket, and having a free end in its reverse end,
**characterized in that**
the headrest support (12) has a stay hole (20) configured such that the headrest stay (14) is inserted therein, and has a tubular shape of which an end in an insertion direction of the headrest stay (14) is closed; and
the fixed end of the leaf spring (23) is embedded in the end thus closed.

2. The headrest support structure according to claim 1, further comprising:
a metal stopper (25) provided in the headrest support (12) and formed integrally with the leaf spring (23), wherein:
the stopper (25) regulates swing of the headrest support (12) relative to the support bracket (11) by abutting with an inner peripheral surface of the support bracket (11).

## Patentansprüche

1. Eine Kopfstützenstützstruktur, umfassend:
eine Metallrohrstützhalterung (11), die konfiguriert ist, um in einem Sitzlehnenrahmen (10) vorgesehen zu sein;
eine Harz-Kopfstützenstütze (12), die konfiguriert ist, um einen Kopfstützenhalter (14) zu tragen, und die in die Stützhalterung eingesetzt ist; und
eine Feder (23), die zwischen der Stützhalterung (11) und der Kopfstützenstütze (12) angeordnet ist, wobei:
die Kopfstützenstütze (12) gegenüber der Stützhalterung (11) elastisch und schwenkbar gelagert ist, um eine Kopfstütze als dynamischen Dämpfer wirken zu lassen;
die Feder (23) eine Metallblattfeder (23) ist, die integral mit der Kopfstützenstütze (12) versehen ist; und
die Blattfeder (23) eine Kragarmfeder mit einem festen Ende in einem Ende davon in einer Einführungsrichtung der Kopfstützenstütze in Bezug auf die Stützhalterung und mit einem freien Ende in ihrem entgegengesetzten Ende beinhaltet,
**dadurch gekennzeichnet, dass**
die Kopfstützenstütze (12) ein Halterloch (20) aufweist, das so konfiguriert ist, dass die Kopfstützenstütze (14) darin eingesetzt ist, und eine Rohrform aufweist, von der ein Ende in einer Einführungsrichtung der Kopfstützenstütze (14) geschlossen ist; und
das feste Ende der Blattfeder (23) in das so geschlossene Ende eingebettet ist.

2. Die Kopfstützenstützstruktur nach Anspruch 1, ferner umfassend:
einen Metallanschlag (25), der in der Kopfstützenstütze (12) vorgesehen und integral mit der Blattfeder (23) ausgebildet ist, wobei:
der Anschlag (25) das Schwenken der Kopfstützenstütze (12) in Bezug auf die Stützhalterung (11) durch Anlegen an eine Innenumfangsfläche der Stützhalterung (11) reguliert.

## Revendications

1. Structure de support d'appuie-tête, comprenant :
une console de support tubulaire métallique (11) configurée pour être prévue dans un bâti de dossier (10) ;
un support d'appuie-tête en résine (12) configuré pour supporter un montant d'appuie-tête (14) et inséré dans la console de support ; et
un ressort (23) disposé entre la console de support (11) et le support d'appuie-tête (12), dans laquelle :
le support d'appuie-tête (12) est élastiquement supporté de manière oscillante par rapport à la console de support (11) afin que la fonction d'appuie-tête serve d'amortisseur dynamique ;
le ressort (23) est un ressort à lames métallique (23) prévu de manière solidaire avec le support d'appuie-tête (12) ;
le ressort à lames (23) comprend un ressort en porte-à-faux ayant une extrémité fixe dans son extrémité, dans une direction d'insertion du support d'appuie-tête par rapport à la console de support, et ayant une extrémité libre dans son extrémité inverse,
**caractérisée en ce que** :
le support d'appuie-tête (12) a un trou de montant (20) configuré de sorte que le montant d'appuie-tête (14) y est inséré, et a une forme tubulaire dont une extrémité dans une direction d'insertion du montant d'appuie-tête (14) est fermée ; et
l'extrémité fixe du ressort à lames (23) est encastrée dans l'extrémité ainsi fermée.

2. Structure de support d'appuie-tête selon la revendication 1, comprenant en outre :
une butée métallique (25) prévue dans le support d'appuie-tête (12) et formée de manière solidaire avec le ressort à lames (23), dans laquelle :
la butée (25) régule l'oscillation du support d'appuie-tête (12) par rapport à la console de support (11) en venant en butée avec une surface périphérique interne de la console de support (11).
